# FASCICULE DE BREVET EUROPEEN

(11) **EP 0 898 356 B1**
(45) Date de publication et mention de la délivrance du brevet: **23.01.2002**
(21) Numéro de dépôt: 98401807.7
(22) Date de dépôt: 17.07.1998
(51) Int. Cl.: H02M 3/07

(54) **Pompes de charge à fréquence variable**
Ladungspumpe mit variabler Frequenz
Charge pump with variable frequency

(30) Priorité: 18.07.1997 FR 9709145
(43) Date de publication de la demande: 24.02.1999
(73) Titulaire: STMicroelectronics S.A., 92120 Montrouge (FR)
(72) Inventeur: Devin, Jean, 75116 Paris (FR)
(74) Mandataire: Ballot, Paul

(56) Documents cités:
- EP-A- 0 772 200
- FR-A- 2 724 468
- JP-A- 8 106 790
- US-A- 5 506 545
- US-A- 5 530 390
- US-A- 5 561 385
- PATENT ABSTRACTS OF JAPAN vol. 11, no. 165 (E-510), 27 mai 1987 & JP 61 295866 A (MATSUSHITA ELECTRIC WORKS), 26 décembre 1986

## Description

L'invention concerne les circuits classiquement appelés pompes de charge ou élévateurs de tension: ces circuits permettent, à partir d'une tension donnée Vcc, de produire une tension Vpp plus élevée que Vcc.

Ces circuits élévateurs de tension sont classiques. Ils comportent des étages. Un étage élévateur de base utilise simplement des interrupteurs, deux capacités et une horloge à deux phases pour actionner les interrupteurs. Dans un premier temps, on charge une première capacité à Vcc, par exemple 5 volts, puis on la décharge dans la deuxième. Un second cycle s'entame alors: premier temps, charge de la capacité à Vcc, et deuxième temps, décharge dans la deuxième (qui est déjà partiellement chargée). Aussi la tension aux bornes de la deuxième capacité augmente-t-elle à chaque coup d'horloge. On utilise des pompes de charge à étages multiples avec des circuits de commutation complémentaires, la tension Vpp croit alors vers une tension supérieure à Vcc.

Ce principe est très utilisé dans les circuits intégrés, notamment pour les mémoires électriquement programmables comportant un transistor à grille flottante comme organe de mémorisation, mémoires EEPROM ou mémoires EPROM, selon que ces mémoires sont électriquement effaçables ou non, ou encore mémoires flash EPROM lorsqu'elles sont effaçables par bloc.

En effet, dans certaines mémoires, la tension de programmation Vpp peut être fournie par une alimentation extérieure. Mais cela nécessite alors une borne d'alimentation spécifique supplémentaire pour le circuit intégré. Les bornes supplémentaires grèvent le coût des circuits intégrés et on préfère les éviter. Dans certaines applications, on peut même ne pas avoir d'alimentation extérieure pour la tension de programmation (exemple: puce de carte à puce à quatre bornes utiles dans lesquelles il n'y a pas de bornes pour la tension de programmation) et il n'est pas question d'en rajouter une. Dans d'autres applications, il peut même ne pas y avoir du tout de bornes d'alimentation extérieure (exemple: carte à puce sans contact dont l'énergie de fonctionnement et le dialogue sont assurés par voie électromagnétique).

C'est pourquoi on a proposé des mémoires en circuit intégré, dans lesquelles la tension de programmation Vpp est produite à l'intérieur même du circuit intégré, à partir de la tension d'alimentation normale Vcc. Pour des raisons de sécurité, il peut être préférable, notamment dans le domaine des cartes à puce, de laisser la production de la tension de programmation sous l'autorité du circuit intégré lui-même. De cette façon, on ne met pas à disposition des fraudeurs une borne supplémentaire par laquelle cette tension de programmation pourrait être fournie au circuit, et avec laquelle ils jouiraient d'un moyen supplémentaire d'agresser le circuit.

Traditionnellement, une pompe de charge travaille avec un signal à une fréquence f de commutation en entrée. On retrouve les effets de ce signal de commutation en bruit de commutation à l'intérieur du circuit élévateur de tension. Ce bruit est d'autant plus fort que la tension Vpp à produire est élevée et qu'il y a beaucoup d'étages.

Le niveau de tension de sortie du circuit élévateur, disponible sur une capacité, est maintenu à une valeur fixe par un régulateur. Ce régulateur peut comporter une chaîne de transistors qui sont montés en diodes pour établir chacun entre sa source et son drain une tension égale à sa tension de seuil. Selon la technologie mise en oeuvre, la tension de seuil varie, et le nombre de transistors en série permet de définir la tension régulée en sortie du régulateur. Par exemple, avec des transistors ayant une tension de seuil de l'ordre de 1 volt, il faut 16 transistors pour avoir une tension régulée Vpp de l'ordre de 16 volts.

Une pompe de charge est donc commandée par un oscillateur produisant des impulsions répétitives cycliquement qui lui servent de signaux de commande. On est alors confronté à deux phénomènes : d'une part une amplification des bruits par un phénomène de résonnance lié à la fréquence de commande de la pompe de charge. Ces bruits perturbent le fonctionnement du reste du circuit intégré. De plus, la pompe de charge elle-même, avec sa fréquence fixe pourrait plus facilement entrer en oscillation induite par un signal extérieur régulier non désiré.

D'autre part, le rayonnement électromagnétique induit par le circuit intégré peut être dangereux pour l'homme. Ceci est le cas par exemple dans les combinés téléphoniques portables, notamment du type G.S.M. (Global System for Mobile) qui sont collés à l'oreille de l'utilisateur. Le risque est alors grand car le cerveau de cet utilisateur est très proche du circuit rayonnant.

On connaît du document US-A- 561 385 un générateur interne de tension comprenant une pompe de charge et un générateur de fréquence variable qui fournit des signaux d'horloge en fonction de signaux de commande, ainsi qu'un dispositif de commande de tension qui permet de commander la fréquence de l'oscillateur en fonction de la tension en sortie de la pompe de charge.

Le document US-A-5 530 390 décrit un contrôleur numérique notamment pour des modules audio, dont l'horloge principale produit des impulsions dont le rapport cyclique est varié de manière aléatoire afin d'éviter de produire des perturbations, par exemple l'apparition de tons dans le système audio.

L'invention concerne donc, pour résoudre ces problèmes, une pompe de charge commandée par une fréquence variable. On a alors, selon l'invention, peu de chance d'entrer en résonnance. Comme la fréquence n'est pas fixée, on diminue de plus les risques pour la santé, risques a priori liés à la fréquence. Certes un signal régulier produit par un oscillateur principal demeurera, mais son effet, selon l'invention, se manifestera sur une portion de circuit réduite et située avant la pompe de charge, donc avant des signaux haute tension dont les rayonnements électromagnétiques sont plus importants.

L'invention a donc pour objet un circuit intégré électronique comportant une pompe de charge et au moins un premier oscillateur pour produire des impulsions répétitives cycliquement servant de signaux de commande de la pompe de charge, caractérisé en ce qu'il comporte un circuit pour masquer la transmission de certaines impulsions à la pompe de charge et pour modifier en conséquence la fréquence d'un rayonnement électromagnétique induit par l'existence de ces impulsions, ledit circuit étant synchronisé avec l'oscillateur de manière à ne pas modifier la largeur des impulsions non masquées transmises vers la pompe de charge.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : un schéma de principe de la génération, selon l'invention, d'un signal de fréquence variable en entrée d'une pompe de charge également représentée ;
- figure 2 : différents chronogrammes des signaux de différents oscillateurs intervenant dans l'invention, ainsi qu'un chronogramme d'un signal de commande de la pompe de charge ;
- figure 3 : un oscillateur en anneau classique utilisable dans l'invention ;
- figure 4 : un schéma d'un circuit permettant la détection de transitions hautes.

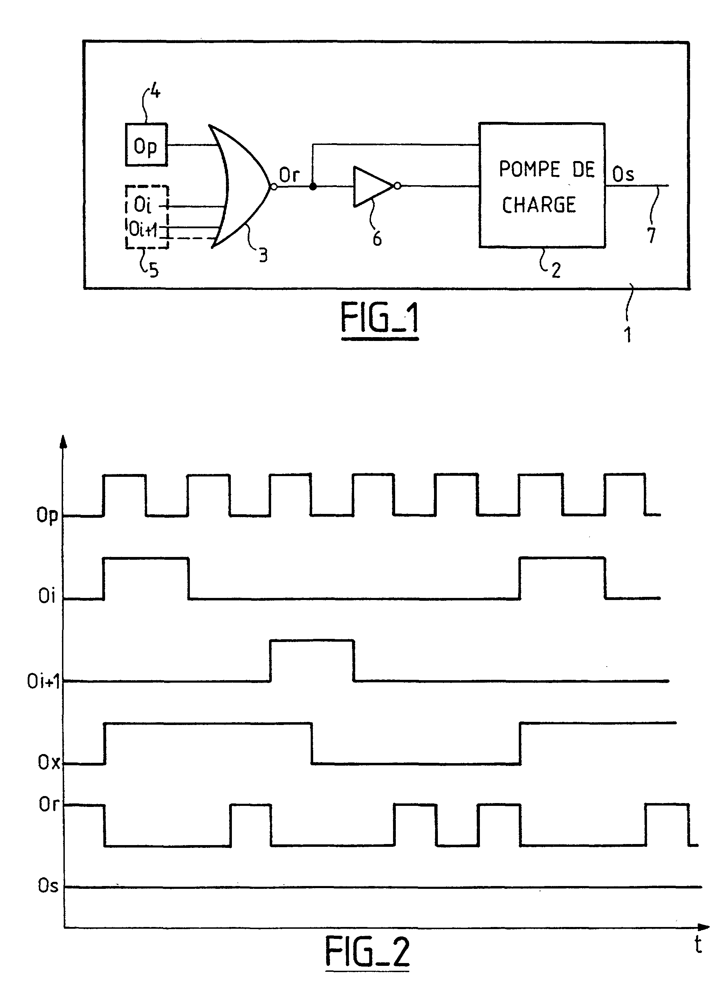

La figure 1 montre un circuit intégré 1 comportant une pompe de charge 2 et au moins un premier oscillateur 4. L'oscillateur 4 produit un signal Op comportant des impulsions répétitives cycliques. On peut notamment prendre des signaux de rapport cycliques 50% et à une fréquence de, par exemple, 5 MHz. Le signal Op produit par l'oscillation 4 est présenté sur la figure 2. Selon une caractéristique essentielle de l'invention, le circuit 1 comporte, interposé entre l'oscillateur 4 et la pompe de charge 2, un circuit 3 pour masquer la transmission de certaines des impulsions du signal 0p. De ce fait, la figure 1 représente le principe de la génération d'un signal Or de fréquence variable. Le signal Or est le signal de commande de la pompe de charge 2. La pompe de charge 2 donne naissance à un signal haute tension Os disponible à sa sortie 7. Les signaux Or et Os sont également montrés figure 2. Pour des raisons pratiques, le signal Or est quelquefois dédoublé par un inverseur 6 qui produit un signal complémentaire du signal Or. Le signal Or et son complémentaire sont appliqués sur les entrées de commande de la pompe 2.

Dans un exemple, ce signal Or de fréquence variable peut tout simplement être récupéré à la sortie d'une porte NOR 3. Il est néanmoins possible de prévoir d'autres circuits qu'une porte NOR 3. Celle-ci a par ailleurs l'avantage de conduire à un circuit 3 très simple. Pour cela, on applique aux différentes entrées de cette porte NOR 3:
- le signal Op produit par le premier oscillateur 4. Le signal Op est constitué d'impulsions répétitives cycliquement. Cet oscillateur 4 émet donc un signal de fréquence fixe;
- un ou plusieurs signaux produits par un ou plusieurs autres oscillateurs 5. Les signaux de ces oscillateurs sont notés Oi, éventuellement Oi + 1, ... . Les signaux Oi, Oi+1 ... sont de fréquence plus faible que celle du signal Op.

Les signaux Oi, Oi+1 sont appliqués en entrée de la porte logique NOR 3. Elle a le rôle d'un circuit de combinaison qui va combiner les signaux des deux oscillateurs. Les signaux Oi, Oi+1 vont masquer la transmission d'une partie des impulsions du signal Op. Certaines impulsions de Op ne sont ainsi pas transmises. En fait, on n'a une impulsion de sortie en sortie de la porte NOR 3 que si tous les signaux d'entrée Op, Oi et Oi+1 présents sont tous à zéro. On casse ainsi la régularité du train d'impulsions initial de Op. La fréquence du signal de sortie de la porte NOR n'est ainsi plus constante. Autrement dit, la porte NOR inverse le signal Op quand tous les autres signaux sont à zéro.

Les signaux de masquage Oi, Oi+1 peuvent tous être produits à partir d'un même signal Ox comme cela sera expliqué plus loin. Le signal Ox est, dans l'exemple, un signal à fréquence plus faible que le signal Op. Le signal Ox a un rapport cyclique de l'ordre de 50%. En fait son rapport cyclique a peu d'importance.

Les chronogrammes caractéristiques des signaux intervenants sont présentés figure 2. On retrouve donc les oscillations principales Op qui sont des impulsions répétitives cycliquement. L'ordre de grandeur de la fréquence de Op est de 1 à 20 Mhz. Cependant, le but de l'invention étant de présenter un principe, il faut être très souple dans la considération des ordres de grandeur des différentes entités intervenant dans la description.

Le signal Oi est un signal a rapport cyclique très inférieur à 50%, par exemple 10-15%. Le signal oi+1 est du même type que le signal Oi. On peut passer du signal Oi au signal Oi+1 par exemple par le passage du signal Oi dans une simple ligne à retard. Le signal Oi+1 est ainsi décalé en phase par rapport au signal Oi.

De préférence, les signaux de masquage issus de l'oscillateur 5 doivent être synchronisés avec Op. Dans ce but ils ne présentent de fronts montants ou descendants que lorsque Op présente un front montant ou descendant. Ceci a pour effet de ne pas modifier la nature, plus précisément la largeur, des impulsions du signal Or pour ne pas perturber le fonctionnement de la pompe de charge.

Pour ne masquer que quelques impulsions du signal Op, on utilise de préférence des signaux Oi, Oi+1 de fréquence plus faible que celle du signal Op et de largeur d'impulsion typiquement d'au moins le double de celle de Op. En effet, si les rapports cycliques des signaux Oi et Oi+1 sont voisins de celui du signal Op, le signal Or sera trop dégradé. Un signal Op dégradé provoque un mauvais fonctionnement des pompes de charge. Les masques Oi seront donc typiquement au moins un ordre de grandeur plus lent que Op, le chronogramme résultant Or est celui représenté figure 2. C'est ce signal Or qui va attaquer la pompe de charge.

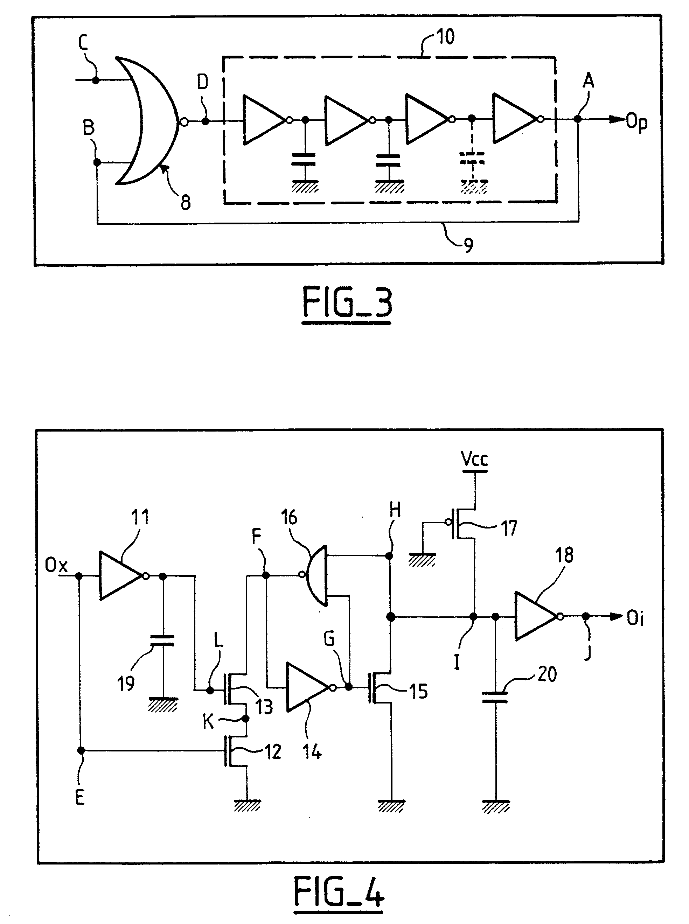

La figure 3 montre un oscillateur en anneau classique qui produit le signal Op. Il est constitué d'un nombre pair d'inverseurs en série rebouclés à sa sortie au noeud A par une connexion 9 sur une entrée, noeud B d'une porte logique NOR 8. La porte NOR 8 reçoit sur une autre entrée, noeud C un signal de commande CMD qui l'active ou non. La sorite de la porte NOR 8 est le noeud D. La série des inverseurs forme un circuit de retard 10. Le temps de transfert d'une porte inverseuse ou d'un inverseur étant d'environ 200 ps, on aurait, avec cinq inverseurs une oscillation à 1 ns soit une fréquence à 1GHz, ce qui est beaucoup trop rapide pour les applications envisagées. Aussi on rajoute des capacités, par exemple de l'ordre de 10pf, connectées en parallèle entre les sorties des inverseurs et la masse, associées à des impédances d'entrée des inverseurs de l'ordre de 10kΩ. On a alors un retard de l'ordre de 100 ns, soit une fréquence de signal de l'ordre de 10MHz.

Le fonctionnement, d'un point de vue logique de cet oscillateur en anneau est le suivant:

L'oscillateur en anneau fonctionne en position basse de commande. C est à l'état 0. Imaginons l'état de A à 1; l'état de B, relié à A uniquement par la connexion de retour 9, est également à 1. B étant à 1, la porte NOR 8 amènera automatiquement D à l'état 0. A se retrouve donc, après un retard, porté à l'état 0, donc B aussi. Cet état 0 se propage, l'ensemble du circuit bascule et un nouveau cycle commence. On obtiendra alors en A une oscillation de rapport cyclique 50%. Sa fréquence dépend du nombre de portes NAND, ainsi que du nombre et de la valeur des capacités de la portion de circuit 10.

Notre oscillateur en anneau fonctionne donc en position basse de commande.

Pour obtenir Ox, on peut utiliser le même principe, c'est à dire un oscillateur en anneau avec cependant des capacités beaucoup plus élevés. On atteint alors un signal de fréquence plus faible que celle de Op, mais toujours avec un rapport cyclique de l'ordre de 50%. Or le rapport cyclique doit être, pour les masques Oi et Oi+1, de l'ordre de 10% afin de ne pas trop dégrader le signal Or. Une solution non limitative, proposée pour produire les signaux de masque Oi et Oi+1 est celle de la figure 4. Il s'agit d'un détecteur de front montant dont le principe et la description sont exposés ci-après.

Le signal Ox est envoyé simultanément sur une porte inverseuse 11 et sur la grille, noeud E, d'un transistor canal N 12. La source du transistor 12 est à la masse et son drain est relié à la source d'un transistor canal N 13, qui récupère sur sa grille la sortie de l'inverseur 11. Un condensateur 19 est également connecté entre la sortie, noeud L, de l'inverseur 11 et la masse. Le drain du transistor canal N 13, noeud I, est pour sa part relié simultanément à une entrée d'un inverseur 14 et à la sortie d'une porte NAND 16. Une des entrées de la porte NAND 16 est la sortie, noeud G, de l'inverseur 14. L'inverseur 14 est également connecté à la grille d'un transistor canal N 15. La source de ce transistor 15 est à la masse. Son drain, noeud H, est connecté d'une part à une autre entrée de la porte NAND 16, noeud H, et d'autre part à une entrée, noeud I, d'une porte inverseuse 18. On récupère le signal de sortie Oi à la sorite de cette porte inverseuse 18. On trouve également, montés en dérivation, entre le drain du transistor canal N 15 et l'inverseur 18, un condensateur 20 relié à la masse, et un transistor canal P 17 dont la grille est à la masse et la source à Vcc.

Si Ox est à 0, l'inverseur 11 fait passer le signal à 1, au noeud L. Le transistor canal N 12 est bloqué. Le transistor 13 a, au départ, sa grille à 5 volts. Le signal, au noeud F est donc à 1. Donc, après l'inverseur 14, le signal, au noeud G est à 0. Le noeud I est à 1 car le transistor canal N 15 est bloqué. On retrouve donc bien 1 à la sortie de la porte NAND 16, au noeud F. De plus, on obtient 0 au noeud J en sortie de l'inverseur 18. On retrouve pour Oi le niveau bas de Ox.

Lors de l'apparition d'un front montant de Ox (Ox passe à 1), on retrouve immédiatement 1 en E. Le transistor 12 est alors saturé et impose un état 0 en K, noeud intermédiaire entre le transistor 12 et le transistor 13.

Pendant un court instant, lié au temps de propagation du signal dans l'inverseur 11 et à la lenteur de cette propagation, due à la présence du condensateur 19, le signal au noeud L sera à 1 en même temps que K. Les deux transistors 12 et 13 sont alors passants en même temps et provoquent un état 0 en F. Ceci entraîne un état 1 en G. Le transistor 15 est alors passant. Comme le transistor canal N 15 est assez puissant, il lutte contre la précharge du transistor canal P 17. En pratique, le transistor 15 est un plus gros transistor que le transistor 17. En polarisation normale, il est susceptible de laisser passer beaucoup plus de courant que le transistor 17, par exemple dix fois plus. Le potentiel en I passe à 0 pendant une durée courte. On a donc en I une courte inflexion du signal. Donc à la sortie de la porte inverseuse 18, le potentiel en J est momentanément à 1. Donc Oi présente une courte impulsion. Pendant ce temps, le potentiel en L est passé à 0. On a donc 1 en F. La porte NAND 16 reconduit alors et on retrouve un état stable, celui qu'on avait quand Ox était à 0.

Ainsi on produit un signal Oi dont l'impulsion est de durée plus courte que celle de Ox. Ce signal Oi reproduit les transitions montantes de Ox, et reste haut pendant un court instant. La durée de la plage haute est déterminée essentiellement par le temps de propagation du signal dans la partie du circuit constituée de l'inverseur 11 et du condensateur 19.

Il faut noter que pour un front descendant, on ne détecte rien en sortie du circuit, les deux transistors canal N 12 et 13 étant toujours bloqués (potentiel en F à 1).

Cependant, il serait très aisé de réaliser un détecteur de transition basse: soit en ajoutant un inverseur en entrée du circuit de la figure 4, soit en remplaçant les deux transistors canal N 12 et 13 par des transistors canal P.

## Revendications

1. Circuit intégré (1) électronique comportant une pompe de charge (2) et au moins un premier oscillateur (4) pour produire des impulsions répétitives cycliquement (Op) servant de signaux de commande de la pompe de charge, **caractérisé en ce qu'**il comporte un circuit (3, 5) pour masquer la transmission de certaines impulsions à la pompe de charge et pour modifier en conséquence la fréquence du rayonnement électromagnétique induit par l'existence de ces impulsions, ledit circuit (3, 5) étant synchronisé avec l'oscillateur (4) de manière à ne pas modifier la largeur des impulsions non masquées transmises vers la pompe de charge.

2. Circuit selon la revendication 1, **caractérisé en ce que** le premier oscillateur est un oscillateur en anneau.

3. Circuit selon l'une des revendications 1 ou 2, **caractérisé en ce que** le circuit pour masquer comporte au moins un deuxième oscillateur (5) dont la fréquence est plus faible que celle du premier oscillateur et un circuit de combinaison (3), de préférence une porte logique NOR, pour combiner les signaux des deux oscillateurs.

4. Circuit selon la revendication 3, **caractérisé en ce que** le deuxième oscillateur produit un signal (Oi) dont le rapport cyclique est inférieur au rapport cyclique du signal du premier oscillateur.

5. Circuit selon l'une des revendications 3 ou 4, **caractérisé en ce qu'**il comporte un troisième oscillateur (Oi+1) décalé en phase par rapport au deuxième oscillateur.

6. Circuit selon la revendication 4, **caractérisé en ce que** le deuxième oscillateur comporte un circuit (11-20) pour produire une impulsion de durée plus courte que la durée de l'impulsion de ce deuxième oscillateur, au moment de l'apparition d'un front d'une impulsion de ce deuxième oscillateur.

7. Circuit selon l'une des revendications 4 ou 6, **caractérisé en ce que** le deuxième oscillateur produit un signal dont le rapport cyclique est de l'ordre de dix pour-cent.

8. Circuit selon l'une des revendications 1 à 7, **caractérisé en ce qu'**un au moins des oscillateurs a un rapport cyclique de cinquante pour-cent.

## Patentansprüche

1. Integrierte elektronische Schaltung (1), welche eine Ladungspumpe (2) umfaßt sowie mindestens einen ersten Oszillator (4) zum Erzeugen von sich zyklisch wiederholenden Impulsen (Op), welche als Signale zur Steuerung der Ladungspumpe dienen,
**dadurch gekennzeichnet,**
**daß** sie einen Schaltkreis (3, 5) enthält zum Maskieren der Aussendung bestimmter Impulse an die Ladungspumpe und zum anschließenden Modifizieren der Frequenz der elektromagnetischen Strahlung, welche durch das Vorhandensein der Impulse induziert wird, wobei die Schaltung (3, 5) mit dem Oszillator (4) auf die Art und Weise synchronisiert ist, daß die Größe der nichtmaskierten, zur Ladungspumpe hin ausgestrahlten Impulse nicht modifiziert wird.

2. Schaltung nach Anspruch 1,
**dadurch gekennzeichnet,**
**daß** der erste Oszillator ein Ringoszillator ist.

3. Schaltung nach einem der Ansprüche 1 oder 2,
**dadurch gekennzeichnet,**
**daß** die Schaltung zum Maskieren zumindest einen zweiten Oszillator (5) umfaßt, dessen Frequenz schwächer ist als die des ersten Oszillators und eine Kombinationsschaltung (3), bevorzugterweise ein logisches NOR-Gatter, zum Kombinieren der Signale der beiden Oszillatoren.

4. Schaltung nach Anspruch 3,
**dadurch gekennzeichnet,**
**daß** der zweite Oszillator ein Signal (Oi) erzeugt, dessen Zyklusverhältnis kleiner ist als das Zyklusverhältnis des Signals des ersten Oszillators.

5. Schaltung nach einem der Ansprüche 3 oder 4,
**dadurch gekennzeichnet,**
**daß** sie einen dritten Oszillator umfaßt (Oi + 1), welcher phasenverschoben ist in Relation zum zweiten Oszillator.

6. Schaltung nach Anspruch 4,
**dadurch gekennzeichnet,**
**daß** der zweite Oszillator eine Schaltung (11-20) umfaßt zum Erzeugen von Impulsen mit einer kürzeren Dauer als die Dauer der Impulse des zweiten Oszillators im Augenblick des Auftretens einer Impulsfront des zweiten Oszillators.

7. Schaltung nach einem der Ansprüche 4 oder 6,
**dadurch gekennzeichnet,**
**daß** der zweite Oszillator ein Signal erzeugt, dessen Zyklusverhältnis in der Größenordnung von 10% liegt.

8. Schaltung nach einem der Ansprüche 1 bis 7,
**dadurch gekennzeichnet,**
**daß** zumindest einer der Oszillatoren ein Zyklusverhältnis von 50% aufweist.

## Claims

1. Electronic integrated circuit (1) comprising a charging pump (2) and at least a first oscillator (4) for producing cyclically repetitive pulses (Op) serving as control signals for the charging pump, **characterised in that** it comprises a circuit (3, 5) for masking the transmission of certain pulses to the charging pump and for modifying the frequency of the electromagnetic radiation induced by the existence of these pulses accordingly, said circuit (3, 5) being synchronised with the oscillator (4) so as not to modify the width of the unmasked pulses transmitted to the charging pump.

2. Circuit according to claim 1, **characterised in that** the first oscillator is a ring oscillator.

3. Circuit according to one of claims 1 or 2, **characterised in that** the circuit for masking comprises at least a second oscillator (5) the frequency of which is lower than that of the first oscillator, and a combining circuit (3), preferably a logical NOR gate, for combining the signals of the two oscillators.

4. Circuit according to claim 3, **characterised in that** the second oscillator produces a signal (Oi) the duty cycle of which is less than the duty cycle of the signal of the first oscillator.

5. Circuit according to one of claims 3 or 4, **characterised in that** it comprises a third oscillator (Oi+1) shifted in phase in relation to the second oscillator.

6. Circuit according to claim 4, **characterised in that** the second oscillator comprises a circuit (11-20) for producing a pulse of shorter duration than the duration of the pulse of the second oscillator, at the moment of the appearance of a leading edge of a pulse of this second oscillator.

7. Circuit according to one of claims 4 or 6, **characterised in that** the second oscillator produces a signal the duty cycle of which is of the order of ten per cent.

8. Circuit according to one of claims 1 to 7, **characterised in that** at least one of the oscillators has a duty cycle of fifty per cent.
